# EUROPEAN PATENT SPECIFICATION

(11) **EP 4 159 482 B1**
(45) Date of publication and mention of the grant of the patent: **13.11.2024**
(21) Application number: 20937755.5
(22) Date of filing: 17.12.2020
(51) Int. Cl.: B60C 15/00, B60C 15/04, B60C 15/06

(54) **PNEUMATIC RADIAL TIRE FOR AIRCRAFT**
RADIALLUFTREIFEN FÜR FLUGZEUGE
PNEUMATIQUE À CARCASSE RADIALE POUR AÉRONEF

(30) Priority: 27.05.2020 JP 2020092583
(43) Date of publication of application: 05.04.2023
(73) Proprietor: BRIDGESTONE CORPORATION, Chuo-ku Tokyo 104-8340 (JP)
(72) Inventor: OGAWA, Gaku, Tokyo 104-8340 (JP); MATSUMOTO, Takuya, Tokyo 104-8340 (JP)
(74) Representative: Marks & Clerk LLP
(86) International application number: PCT/JP2020/047294
(87) International publication number: WO 2021/240854

(56) References cited:
- EP-A1- 1 318 029
- EP-A2- 0 396 494
- JP-A- 2003 080 908
- JP-A- 2003 226 119
- JP-A- 2009 298 401
- JP-A- H 068 706
- KR-A- 20130 085 518

## Description

### TECHNICAL FIELD

The present invention relates to a pneumatic radial tire for aircraft.

### BACKGROUND

Pneumatic radial tires for aircraft are used at high internal pressure, which causes significant distortion of the bead portion during use. Demand therefore exists for improvement in pressure resistance.

In particular, in recent years, the number of carcass plies has in some cases been reduced to reduce the weight of a pneumatic radial tire for aircraft. For example, see Patent Literature (PTL) 1. In such cases, the burden per carcass ply increases, making further measures to address pressure resistance particularly desirable.

Further, an aircraft tire is known from EP 0396494 A2 comprising multiple carcass layers and bead reinforcement layers. KR 2013 0085518 A describes an aircraft tire, in which a carcass layer ends at the bead core. EP 1318029 A1 discloses a tire for light trucks, in which a carcass layer ends within 45°-90° above the bead core.

### CITATION LIST

### Patent Literature

PTL 1: JP 5361061 B2

### SUMMARY

### (Technical Problem)

It is an aim of the present invention to provide a pneumatic radial tire for aircraft with improved pressure resistance.

### (Solution to Problem)

A summary of the present invention is as follows.

A pneumatic radial tire for aircraft according to the present disclosure includes:
a pair of bead cores, each formed by a cable bead, embedded in a respective pair of bead portions;
a pair of bead fillers respectively arranged outward in a tire radial direction from the pair of bead cores; and
a carcass formed by two or more carcass plies that extend toroidally between the pair of bead cores, wherein
in a tire widthwise cross-sectional view,
an end of a carcass ply, among the two or more carcass plies, closest to the bead filler in a region inward in a tire width direction from the bead filler is located in a region corresponding to 45° to 90° inward in the tire width direction when 0° is defined as outward in the tire radial direction from a center of the bead core.

In the present disclosure, the "applicable rim" refers to a standard rim (Design Rim) of an applicable size that is described, or will be described in the future, in the latest AIRCRAFT YEAR BOOK published by the Tire and Rim Association, Inc. (TRA) in the USA, or the latest EDI (Engineering Design Information for Aircraft Tires) (the 2017 edition is used for the values in the present specification). In the case of a size not listed in these standards, the "applicable rim" refers to a rim applicable for the tire.

The "prescribed internal pressure" represents the air pressure (maximum air pressure) corresponding to the maximum load capability of a single wheel in an applicable size/ply rating described by the aforementioned standards. In the case of a size not listed in the aforementioned standards, the "prescribed internal pressure" refers to the air pressure (maximum air pressure) corresponding to the maximum load capability prescribed for each vehicle on which the tire is mounted.

### (Advantageous Effect)

According to the present invention, a pneumatic radial tire for aircraft with improved pressure resistance can be provided.

### BRIEF DESCRIPTION OF THE DRAWINGS

In the accompanying drawings:
FIG. 1 is a cross-sectional view in the tire width direction of a pneumatic radial tire for aircraft according to an embodiment of the present invention; and
FIG. 2 is an enlarged view of a region including the bead portion in FIG. 1.

### DETAILED DESCRIPTION

Embodiments of the present invention are described below in detail with reference to the drawings.

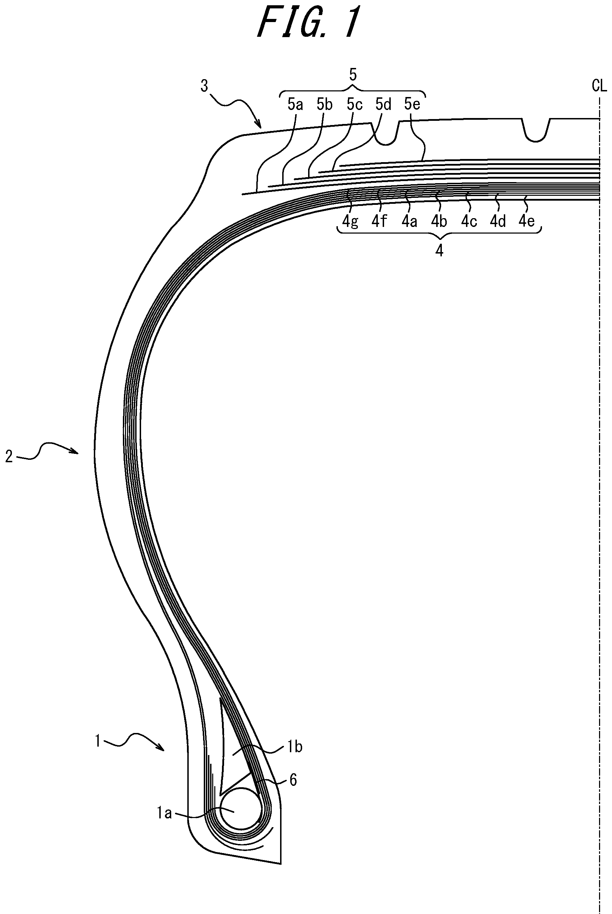

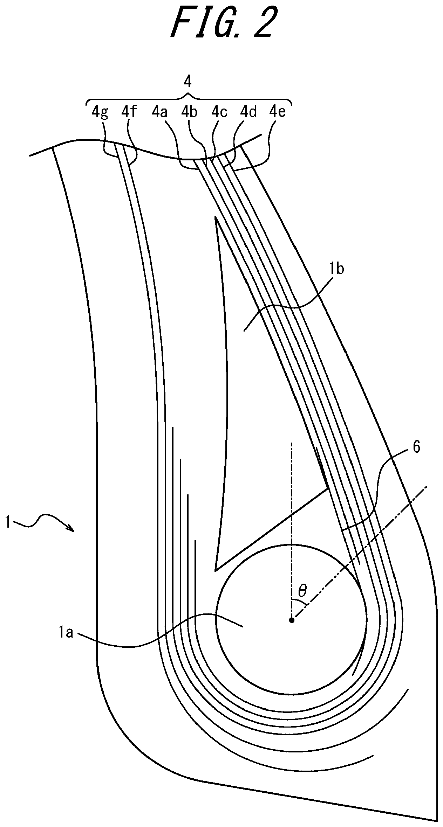

FIG. 1 is a cross-sectional view in the tire width direction of a pneumatic radial tire for aircraft (hereinafter also referred to simply as a tire) according to an embodiment of the present invention. FIG. 1 illustrates a state in which the tire is mounted on an applicable rim, filled to the prescribed internal pressure, and under no load (hereinafter also referred to as a reference state). FIG. 2 is an enlarged view of a region including the bead portion in FIG. 1.

As illustrated in FIG. 1, the tire in the present example includes a pair of bead portions 1, a pair of sidewall portions 2 connected to the bead portions 1, and a tread 3 connecting the two sidewall portions 2. The tire in the present example also includes a carcass 4 extending toroidally between the pair of bead portions 1 and a belt 5 disposed outward in the tire radial direction from a crown portion of the carcass.

As illustrated in FIGS. 1 and 2, the tire in the present example has a bead core 1a embedded in each of the two bead portions 1. In the illustrated example, the bead core 1a is formed by an annular cable bead. In the illustrated example, the bead core 1a has a circular cross-sectional shape. A high-carbon steel wire, for example, can be used as the bead wire.

In the present example, a bead filler 1b is disposed outward in the tire radial direction from the bead core 1a. In the illustrated example, the bead filler 1b has a substantially triangular cross-sectional shape, tapering in width in the tire width direction from the inside to the outside in the tire radial direction, but the bead filler 1b can have any of various cross-sectional shapes. One or more types of any known hard rubber, for example, can be used in the bead filler 1b.

As illustrated in FIGS. 1 and 2, the tire in the present example includes a carcass 4 (radial carcass) formed by two or more (seven in the illustrated example) carcass plies 4a to 4g. Specifically, the carcass 4 in the present example is formed by one ply 4a adjacent (closest) to the bead filler 1b inward in the tire width direction, one or more (four in the illustrated example) turn-up plies 4b, 4c, 4d, 4e, and one or more (two in the illustrated example) down plies 4f, 4g. The ply 4a is formed by a carcass body portion that extends toroidally between the pair of bead cores 1a. The turn-up plies 4b, 4c, 4d, 4e have a carcass body portion that extends toroidally between the pair of bead cores 1a and a carcass wind-up portion extending from the carcass body portion and wound around the bead core 1a from the inner side in the tire width direction to the outer side. In the illustrated example, the ends of the wind-up portions of the turn-up plies 4b, 4c, 4d, 4e are all located outward in the tire width direction from the center of the bead core 1a. At least one of the ends of the wind-up portions of the turn-up plies 4b, 4c, 4d, 4e may, however, be located inward in the tire width direction from the center of the bead core 1a, for example at the tire widthwise position where the tire widthwise inner end of the bead core 1a is located. The down plies 4f, 4g extend toroidally between the pair of bead cores 1a and cover the turn-up plies 4b to 4e. In the illustrated example, the down plies 4f, 4g extend from the tire widthwise inner end of the bead core 1a to the inside in the tire width direction, but at least one of the down plies can terminate on the outside in the tire width direction from the tire radial inner end of the bead core 1a or terminate at the tire radial position at which the tire radial inner end of the bead core 1a is located. Each carcass ply can be formed using cords made of organic fibers or the like, but steel cords can also be used. In the crown portion of the carcass 4, the carcass plies are arranged in the order of 4g, 4f, 4a, 4b, 4c, 4d, 4e from the tire radial outer side. On the tire radial inner side of the bead core 1a, the carcass plies are arranged in the order of 4b, 4c, 4d, 4e, 4f, 4g from the tire radial outer side.

As illustrated in FIGS. 1 and 2, the end of the carcass ply that, among the two or more carcass plies, is closest to the bead filler 1b in the region inward in the tire width direction from the bead filler 1b (ply 4a in the illustrated example) is located in a region corresponding to 45° to 90° inward in the tire width direction when 0° is defined as outward in the tire radial direction from the center of the bead core 1a (the region in which the angle θ illustrated in FIG. 2 is 45° to 90°).

The ends of the carcass wind-up portions of the turn-up plies 4b to 4e are staggered in the tire radial direction, which can further suppress the occurrence of failure caused by the ends of the carcass wind-up portions. In the illustrated example, the ends of the outer peripheral carcass plies are staggered in the tire radial direction so as to be located outward in the tire radial direction from the ends of the inner peripheral carcass plies, but this example is not limiting, and the positions in the tire radial direction can be staggered in various arrangements. Alternatively, the ends of at least some of the carcass wind-up portions of the turn-up plies 4b to 4e can be aligned in the tire radial direction.

Furthermore, the ends of the down plies 4f, 4g are also staggered in the tire width direction, which can further suppress the occurrence of failure caused by the ends of the down plies. In the illustrated example, the edge of the inner peripheral down ply 4f is positioned inward in the tire width direction from the edge of the outer peripheral down ply 4g. The edge of the inner peripheral down ply 4f may, however, be positioned outward in the tire width direction from the edge of the outer peripheral down ply 4g, or the edges may be aligned in the tire width direction.

In the illustrated example, the belt 5 is formed by five belt layers 5a to 5e that are stacked in the order of belt layers 5a, 5b, 5c, 5d, 5e from the inside in the radial direction. In the illustrated example, the width of the belt layers in the tire width direction increases in the order of the belt layers 5a, 5b, 5c, 5d, 5e. However, the belt structure is not particularly limited in the present disclosure, and the number of belt layers, the width of each belt layer in the tire width direction, and the like can be set appropriately. Furthermore, as appropriate, a belt reinforcement layer formed by a rubberized layer of cords extending in the tire circumferential direction can be placed on the tire radial inner or outer side of the belt 5, for example.

As illustrated in FIGS. 1 and 2, in the tire of the present embodiment, a reinforcement layer 6 is arranged between the bead core 1a and the carcass 4 and covers at least a portion of the bead core. The reinforcement layer 6 extends from one region, which is on the tire widthwise inner side of the bead filler 1b and extends from the tire radial outer end to the tire radial inner end of the bead filler 1b, at least to another region, which is inward in the tire width direction from the bead core 1a and is inward in the tire radial direction from the tire radial outer end of the bead core 1a.

In the illustrated example, the reinforcement layer 6 extends from one region, which is on the tire widthwise inner side of the bead filler 1b and extends from the tire radial outer end to the tire radial inner end of the bead filler 1b, to another region, which is inward in the tire width direction from the center of the bead core 1a and is inward in the tire radial direction from the center of the bead core 1a. However, the reinforcement layer 6 may extend to a region that is outward in the tire width direction from the center of the bead core 1a and is inward in the tire radial direction from the center of the bead core 1a, or may extend to a region that is outward in the tire width direction from the center of the bead core 1a and is outward in the tire radial direction from the center of the bead core 1a. The tire radial outer end of the reinforcement layer 6 may be located outward in the tire radial direction from the tire radial outer end of the bead filler 1b.

In the present example, the reinforcement layer 6 is a rubberized layer of composite cord in which a core is surrounded by a sheath. In the present example, the core is formed from polypropylene, and the sheath is formed from a polyethylene-polypropylene copolymer.

The effects of the pneumatic radial tire for aircraft according to the present invention are described below.

As a result of conducting intensive study to solve the problem, we discovered that in the region adjacent to the bead filler inward in the tire width direction, the carcass plies are subjected to a force that pulls outward in the tire radial direction when the tire is filled to the internal pressure, and that in a region adjacent to the bead core, the carcass plies are subjected to a particularly strong force that pulls inward in the tire radial direction due to a restraining force from the bead core. This is due to the high rigidity of the bead core against pulling and rotation outward in the tire radial direction. Therefore, we found that the distortion of the carcass ply closest to the bead core is greater in the region adjacent to the tire widthwise inner side of the bead filler.

On the other hand, in the region adjacent to the bead core, the distortion of the carcass plies is relatively small, since the carcass plies are restrained by the bead core. Furthermore, in the carcass ply adjacent to the tire widthwise outer side of the bead filler, the distortion of the turn-up ply adjacent to the bead core is relatively small because of the presence of the edge.

Therefore, in the pneumatic radial tire for aircraft of the present invention, the edge of the carcass ply 4a that, among the two or more carcass plies, is adjacent to the tire widthwise inner side of the bead filler 1b is located in a region corresponding to 45° to 90° inward in the tire width direction when 0° is defined as outward in the tire radial direction from the center of the bead core. By the edge of the carcass ply 4a adjacent to the tire widthwise inner side of the bead filler 1b being arranged in the aforementioned region, the restraining force from the bead core 1a can be spread out among the carcass ply 4a adjacent to the tire widthwise inner side of the bead filler 1b and the carcass plies adjacent thereto. This prevents the restraining force from the bead core on each carcass ply from becoming too large, and the large distortion that occurs in the region adjacent to the bead filler in each carcass ply can be suppressed, thereby improving the pressure resistance of the tire.

Here, a reinforcement layer 6 covering at least a portion of the bead core is preferably arranged between the bead core 1a and the carcass 4. This can reduce the restraining force by the bead core 1a on the carcass plies 4a and 4b and reduces the distortion occurring in the carcass plies at the region on the tire widthwise inner side of the bead filler 1b, thereby improving the pressure resistance of the tire. In particular, the reinforcement layer 6 more preferably extends from one region, which is on the tire widthwise inner side of the bead filler 1b and extends from the tire radial outer end to the tire radial inner end of the bead filler 1b, at least to another region, which is inward in the tire width direction from the bead core 1a and is inward in the tire radial direction from the tire radial outer end of the bead core 1a. The aforementioned effect of reducing the distortion generated in the carcass plies is thereby more reliably achieved, and the pressure resistance of the tire can be further improved.

In a case in which a reinforcement layer is provided as described above, a failure could occur at the edge of the reinforcement layer.

To address this, the reinforcement layer is preferably a rubberized layer of composite cord in which a core is surrounded by a sheath, as in the above embodiment. This is because failure starting at the edge of the reinforcement layer can be suppressed.

Here, the core is preferably formed from a high melting point resin (for example, a resin with a melting point of 150°C or higher as measured according to JIS-K-7121), and the sheath is preferably formed from an olefin polymer with a lower melting point than the high melting point resin. At the longitudinal end of the resin body, the end face of the high melting point resin is preferably covered by an olefin copolymer, and the olefin polymer and the rubber are preferably fused together.

In the core, the olefin copolymer is preferably an olefinic random copolymer, yielded by subjecting a monomer containing ethylene or propylene to addition polymerization, and is also preferably an ethylene-propylene random copolymer. In this case, the propylene content in the ethylene-propylene random copolymer is 99.7 mol% to 20 mol%, and the ethylene content is 0.3 mol% to 80 mol%. The olefinic random copolymer yielded by subjecting a monomer containing ethylene or propylene to addition polymerization is preferably an ethylene random copolymer.

The aforementioned high melting point resin is particularly preferably polypropylene resin, and the olefin polymer with a lower melting point than the high melting point resin is particularly preferably a random copolymer of ethylene and propylene.

As in the above embodiment, the core is preferably formed from polypropylene, and the sheath is preferably formed from a polyethylene-polypropylene copolymer. This is because failure starting at the edge of the reinforcement layer can be further suppressed.

Furthermore, the fineness of the reinforcement layer is preferably 100 dtex or more and 5,000 dtex or less, and the reinforcement layer is preferably substantially uncrossed within the rubberized layer and preferably formed by one or a bundle of 10 or fewer fibers. Furthermore, the crystallinity parameter of the olefin polymer is preferably -0.06 or less as measured by Raman spectroscopy, and the orientation parameter obtained from the ratio of the band intensity to the polarization direction of the Raman band measured by Raman spectroscopy is preferably 13 or less.

The Young's modulus (at 5% tensile strain) in the extending direction of the cords in the reinforcement layer is preferably between 1500 MPa and 1800 MPa.

Although not limited to this example, the reinforcement layer can be produced by using the core and sheath materials illustrated above and a single-screw extruder with a diameter of 50 mm, for example, for the core and sheath, setting the spinning temperature of the core component to 265°C, for example, setting the spinning temperature of the sheath component to 225°C, for example, using a core-sheath composite spinneret with a diameter of 1.5 mm, for example, performing melt spinning at a discharge rate of 19.5 g/min, for example, for the core component and a discharge rate of 13.0 g/min, for example, for the sheath component to achieve a sheath/core ratio of 4:6 by mass ratio, for example, stretching in a hot water bath at 98°C, for example, to a factor of 3.5, and winding at a speed of 90 m/min, for example, to produce a core-sheath type composite monofilament with a fineness of 550 dtex, for example.

Here, the cords of the reinforcement layer are preferably inclined at an angle of 20° or less with respect to the tire meridian direction (an angle of -20° to +20°).

While embodiments of the present invention have been described above, the scope of the present invention is only limited by the appended claims. For example, a reinforcement member such as a chafer can be further disposed in the bead portions as appropriate. In addition, inclusion of the aforementioned reinforcement layer is not essential in the present invention,

### REFERENCE SIGNS LIST

- 1: Bead portion
- 1a: Bead core
- 1b: Bead filler
- 2: Sidewall portion
- 3: Tread
- 4: Carcass
- 4a, 4b, 4c, 4d, 4e, 4f, 4g: Carcass ply
- 5: Belt
- 5a, 5b, 5c, 5d, 5e: Belt layer
- 6: Reinforcement layer

## Claims

1. A pneumatic radial tire for aircraft comprising:
a pair of bead cores (1a), each formed by a cable bead, embedded in a respective pair of bead portions (1);
a pair of bead fillers (1b) respectively arranged outward in a tire radial direction from the pair of bead cores (1a); and
a carcass (4) formed by two or more carcass plies (4a-4g) that extend toroidally between the pair of bead cores (1a), **characterized in that**
in a tire widthwise cross-sectional view,
an end of a carcass ply (4a), among the two or more carcass plies (4a-4g), closest to the bead filler : (1b) in a region inward in a tire width direction from the bead filler (1b) is located in a region corresponding to 45° to 90° inward in the tire width direction when 0° is defined as outward in the tire radial direction from a center of the bead core (1a).

## Patentansprüche

1. Radialluftreifen für ein Luftfahrzeug, Folgendes umfassend:
ein Paar Wulstkerne (1a), wobei jeder durch eine Kabelwulst gebildet ist, die in einem jeweiligen Paar Wulstabschnitte (1) eingebettet sind;
ein Paar Kernreiter (1b), die jeweils in einer Reifenradialrichtung von dem Paar Wulstkerne (1a) nach außen hin angeordnet sind; und
eine Karkasse (4), die durch zwei oder mehr Karkassenlagen (4a-4g) gebildet ist, die sich toroidal zwischen dem Paar Wulstkerne (1a) erstrecken, **dadurch gekennzeichnet, dass**
in einer Querschnittsansicht eines Reifens der Breite nach,
ein Ende einer Karkassenlage (4a) unter den zwei oder mehr Karkassenlagen (4a-4g), die dem Kernreiter (1b) in einem Bereich einwärts in einer Reifenbreitenrichtung von dem Kernreiter (1b) am nächsten ist, sich in einem Bereich befindet, der 45° bis 90° einwärts in der Reifenbreitenrichtung entspricht, wenn 0° als auswärts in der Reifenradialrichtung von einer Mitte des Wulstkerns (1a) definiert ist.

## Revendications

1. Bandage pneumatique radial pour un aéronef, comprenant :
une paire de tringles de talon (1a), chacune formée d'une tringle de câble, encastrées dans une paire respective de portions de tringles (1) ;
une paire de bourrages sur tringle (1b) respectivement agencés vers l'extérieur dans une direction radiale de pneu à partir de la paire de tringles de talon(1a) ; et
une carcasse (4) formée par deux plis de carcasse ou plus (4a-4g) qui s'étendent de manière toroïdale entre la paire de tringles de talon (1a), **caractérisée en ce que**
dans une vue en coupe transversale du pneu dans un sens de la largeur,
une extrémité d'un pli de carcasse (4a), parmi les deux plis de carcasse ou plus (4a-4g), le plus proche du bourrage sur tringle (1b) dans une région située vers l'intérieur dans un sens de la largeur du pneu à partir du bourrage sur tringle (1b) est située dans une région correspondant à un angle de 45° à 90° vers l'intérieur dans le sens de la largeur du pneu lorsque 0° est défini comme étant vers l'extérieur dans le sens radial du pneu à partir d'un centre de la tringle de talon (1a).
